# EUROPEAN PATENT SPECIFICATION

(11) **EP 1 632 726 B1**
(45) Date of publication and mention of the grant of the patent: **10.08.2016**
(21) Application number: 05017877.1
(22) Date of filing: 17.08.2005
(51) Int. Cl.: F24F 1/00, F24F 13/32, F24F 12/00

(54) **Ceiling suspended type air conditioner**
Klimaanlage zur Aufhängung an der Decke
Dispositif de conditionnement d'air suspendu au plafond

(30) Priority: 03.09.2004 JP 2004257296
(43) Date of publication of application: 08.03.2006
(73) Proprietor: SANYO ELECTRIC CO., LTD., Moriguchi-shi, Osaka (JP)
(72) Inventor: Fukushima, Toshio, Ota-shi Gunma (JP); Tamura, Takaaki, Ora-gun Gunma (JP); Takahashi, Kazuo, Ota-shi Gunma (JP); Nakayama, Toshio, Kiryu-shi Gunma (JP); Yamada, Wazou, Ora-gun Gunma (JP); Kubo, Toshio, Ora-gun Gunma (JP); Saitou, Junichi, Ashikaga-shi Tochigi (JP)
(74) Representative: Glawe, Delfs, Moll

(56) References cited:
- EP-A1- 1 429 081
- DE-A1- 4 002 560
- JP-A- 6 147 545
- JP-A- S6 317 329
- JP-A- 10 274 425
- JP-U- S6 332 229

## Description

### BACKGROUND OF THE INVENTION

### 1. Field of the Invention

The present invention relates to a ceiling suspended type air conditioner that is set up while suspended from the ceiling.

### 2. Description of the Related Art

A built-in type air conditioner has been mainly popular as an air conditioner having a ventilatory function. However, this type of air conditioner has such a drawback that a large amount of construction cost and a long constructing term are needed when it is set up in an existing building. In order to solve this problem, there has been proposed such a type that a total enthalpy heat exchanger (total heat exchanger) is placed separately from the air conditioner. However, this construction has a problem that air different in air quality, temperature, humidity, etc. from air blown out from the blow-out port of the air conditioner is blown out from the total enthalpy heat exchanger, so that unevenness occurs in indoor air. In view of the above problem, there has been proposed an air conditioner having an integral structure in which the main body of the air conditioner is integrated with the total enthalpy heat exchanger (for example, JP-UM-B-3-3871), and further there has been also proposed an air condition which has the integral structure as described above and also is set up while suspended from the ceiling (hereinafter referred to as a ceiling suspended type air conditioner).

With respect to the ceiling suspended type air conditioner as described above, an air supply duct and an air exhaust duct which intercommunicate with an air supply fan and an exhaust fan accommodated in the total enthalpy heat exchanger are provided at the back side of the main body of the total enthalpy heat exchanger, and designed so as to drawn out the outside to execute ventilation.

A ceiling suspended type air conditioner is known from JP 10 274425 A. However, when the air conditioner thus constructed is set up, for example, some obstacle such as a beam or the like may be located in an area where each duct is drawn out. In such a case, the air conditioner itself must be shifted from the initial position to a different position and set up there because the duct abuts against the beam. Therefore, the degree of freedom for the setup work of the air conditioner has been hitherto restricted.

### SUMMARY OF THE INVENTION

The present invention has been implemented in view of the foregoing situation, and has an object to provide a ceiling suspended type air conditioner in which an air supply duct and an air exhaust duct are connectable to the main body of the air conditioner from plural sides, thereby enhancing the degree of freedom for the setup work of the air conditioner.

In order to attain the above obj ect, according to the present invention, a ceiling suspended type air conditioner (100) according to claim 1 is proposed.

In the above ceiling suspended type air conditioner, the air exhaust duct connection ports (43A, 43B, 43C) are formed on the upper surface, lower surface and back surface of the total enthalpy heat exchanger main body (200A).

In the above ceiling suspended type air conditioner, the air supply duct (12) and the air exhaust duct (24) are connected to one of the air supply duct connection ports (41A, 41B, 41C) and one of the air exhaust duct connection ports (43A, 43B, 43C), the air supply duct connection port connected to the air supply duct (12) and the air exhaust duct connection port connected to the air exhaust duct (24) being formed on the same surface of the total enthalpy heat exchanger main body.

In the above ceiling suspended type air conditioner, each of the duct connection ports (41A, 41B, 41C, 43A, 43B, 43C) other than the air supply duct connection port and the air exhaust duct connection port to which the air supply duct (12) and the air exhaust duct (24) are connected is provided with a closing member for closing the duct connection port concerned.

According to the present invention, any duct connection ports are arbitrarily selected from the plural duct connection ports, and the ducts are connected to the selected duct connection ports. Therefore, the degree of freedom for the setup work of the air conditioner can be enhanced.

### BRIEF DESCRIPTION OF THE DRAWINGS

Fig. 1 is a circuit diagram showing an embodiment of a ceiling suspended type air conditioner according to the present invention;
Fig. 2 is a perspective view showing the ceiling suspended type air conditioner of Fig. 1, which is viewed from the lower side;
Fig. 3 is a plan view showing an air conditioner when the upper panel of a total enthalpy heat exchanger main body is detached;
Fig. 4 is a cross-sectional view taken along A-A line of Fig. 3;
Fig. 5 is a cross-sectional view taken along B-B line of Fig. 3;
Fig. 6 is a diagram showing a case where an air supply duct is connected to another duct connection port;
Fig. 7 is a diagram showing a case where an air exhaust duct is connected to another duct connection port;
Fig. 8 is a diagram showing a case where the air supply duct is connected to another duct connection port; and
Fig. 9 is a diagram showing a case where the air exhaust duct is connected to another duct connection port.

### DETAILED DESCRIPTION OF THE PREFERRED EMBODIMENTS

A preferred embodiment according to the present invention will be described hereunder with reference to the accompanying drawings.

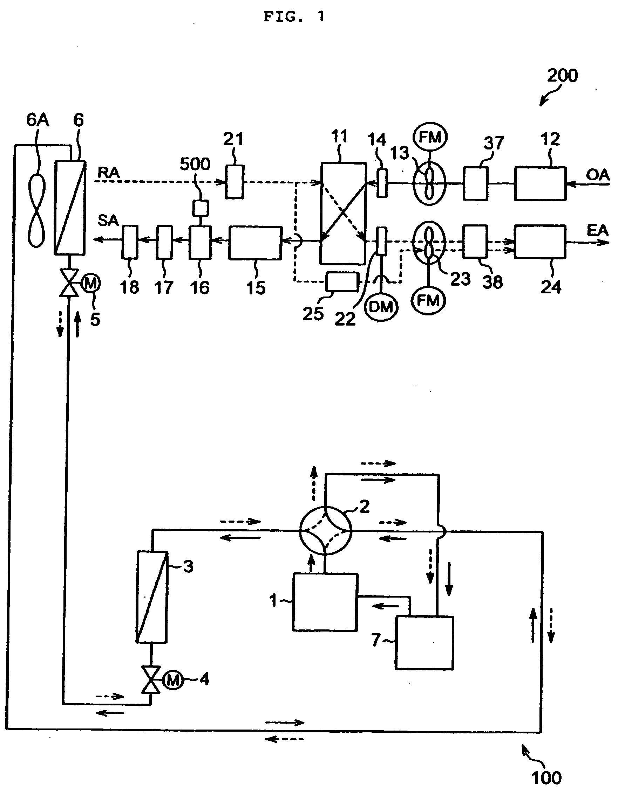

In Fig. 1, reference numeral 100 represents an air conditioner, and reference numeral 200 represents a total enthalpy heat exchanger. The air conditioner 100 shown in Fig. 1 is equipped with a compressor, and an outdoor heat exchanger 3 connected to the compressor 1 through a four-way valve 2. Furthermore, an indoor heat exchanger 6 is connected to the outdoor heat exchanger 3 through two mechanical valves 4 and 5, an accumulator 7 is connected to the indoor heat exchanger 6 through the four-way valve 2, and the accumulator 7 is connected to the compressor 1.

In the air conditioner 100, solid-line arrows represent the flow of refrigerant under cooling operation. The refrigerant discharged from the compressor 1 passes through the four-way valve 2 and reaches the outdoor heat exchanger 3 to be condensed. Then, the refrigerant thus condensed passes through the mechanical valves 4 and 5 and reaches the indoor heat exchanger 6. In the indoor heat exchanger 6, the refrigerant is supplied with air blown out from an indoor air blower 6A to be evaporated, and them the refrigerant thus evaporated passes through the four-way valve 2 and the accumulator 7 and returns to the compressor 1. A room to be air-conditioned is cooled by the air blown from the indoor air blower 6A.

Broken line arrows represent the flow of refrigerant under heating operation. In this case, the refrigerant discharged from the compressor 1 passes through the four-way valve 2 and reaches the indoor heat exchanger 6. In the indoor heat exchanger 6, the refrigerant is supplied with air blown out from the indoor air blower 6A to be condensed, and then the refrigerant thus condensed passes through the mechanical valves 5 and 4 and reaches the outdoor heat exchanger 3. In the outdoor heat exchanger 3, the refrigerant is evaporated, and then passes through the accumulator 7 and returns to the compressor 1. The room to be air-conditioned is heated by the air blown from the indoor air blower 6A.

The total enthalpy heat exchanger 200 comprises a total enthalpy heat-exchanging element 11. The total enthalpy heat-exchanging element 11 is constructed as follows. That is, a flat sheet is put on a first corrugated sheet which is folded in the form of bellows, and then a second corrugated sheet which is folded in the form of bellows in a different folding direction to that of the first corrugated sheet is put on the flat sheet. This laminate structure comprising the first corrugated sheet, the flat sheet and the second corrugated sheet is repeated to thereby form the total enthalpy heat-exchanging element 11. The total enthalpy heat-exchanging element 11 is supplied with outdoor air and also with exhaust air (indoor air) from a room being air-conditioned. The indoor air and the outdoor air thus supplied to the total enthalpy heat-exchanging element 11 are heat-exchanged with each other, and then the outdoor air is supplied to the room being air-conditioned while the indoor air is exhausted to the outside. Here, the outdoor air is passed through an air supply duct 12, an air supply chamber 37 and an air supply fan 13, and then reaches the total enthalpy heat-exchanging element 11 through an outdoor air filter 14. Thereafter, the outdoor air is passed from the total enthalpy heat-exchanging element 11 through an air supply path 15, a humidifier 16, an air blow-out flap 17 and an air blow-out louver 18 and reaches the room being air-conditioned. A humidifying tank 500 is connected to the humidifier 16, and if water is directly supplied to the tank, humidifying water is successively supplied into the humidifier 16.

The indoor air from the room being air-conditioned passes through a suction grill 21 and then reaches the total enthalpy heat-exchanging element 11. Thereafter, the indoor air passes from the total enthalpy heat-exchanging element 11 through a dumper 22, an exhaust fan 23, an exhaust chamber 38 and an air exhaust duct 24, and then discharged to the outside. The dumper 22 freely shuts off the air flow path, and when the air flow path is shut off, the indoor air passing through the suction grill 21 bypasses the total enthalpy heat-exchanging element 11, reaches the exhaust fan 23 through a normal ventilation air flow path 25, and then is discharged through the exhaust chamber 38 and the air exhaust duct 24 to the outside.

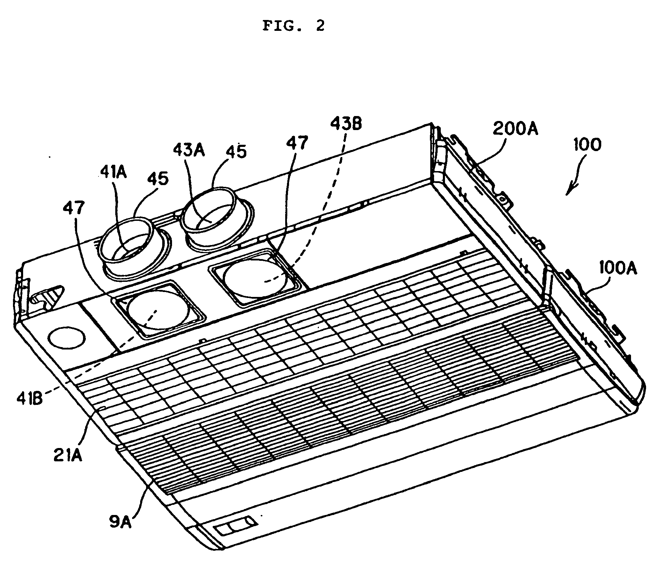

Fig. 2 is a perspective view showing the air conditioner which is viewed from the lower side.

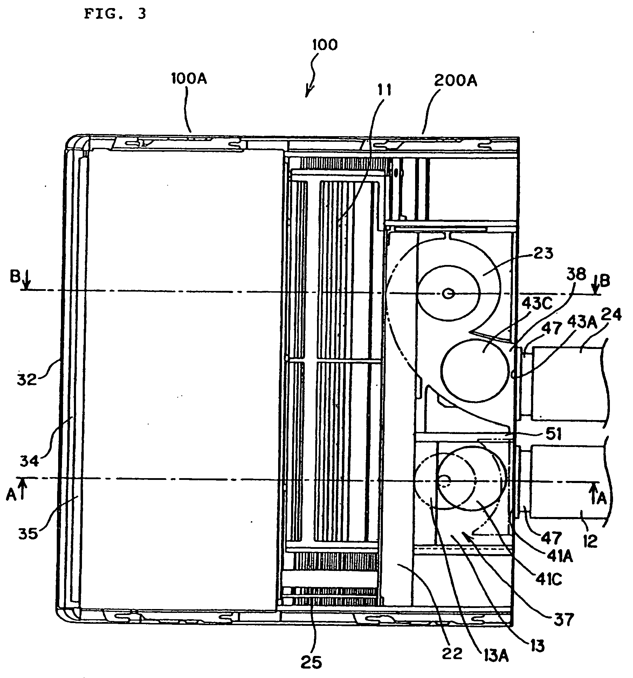

The air conditioner 100 comprises an air conditioner main body 100A suspended from the ceiling, and a total enthalpy heat exchanger main body 200A for adjusting the outside air temperature, which is joined to the back side of the air conditioner main body 100A and integrated with the air conditioner main body 100A. Air supply duct connection ports 41A to 41C and air exhaust duct connection ports 43A to 43C are formed on plural wall surfaces of the total enthalpy heat exchanger main body 200A. Any one of the air supply duct connection ports 41A to 41C and any one of the air exhaust duct connection ports 43A to 43C are selected, and the air supply duct 12 (Fig. 3) and the air exhaust duct 24 (Fig. 3) are connectable to these selected duct connection ports.

In this embodiment, the air supply duct connection ports 41A to 41C and the air exhaust duct connection ports 43A to 43C are formed on the back surface, lower surface and upper surface of the total enthalpy heat exchanger main body 200A. A connecting member 45 is disposed at each of the duct connection ports 41A and 43A formed on the back surface of the total enthalpy heat exchanger main body 200A, and the air supply duct 12 (Fig. 3) and the air exhaust duct 24 (Fig. 3) are connected to these connecting members 45. Furthermore, closing members 47 for closing the other duct connection ports 41B, 43B, 41C and 43C are disposed at the duct connection ports 41B, 43B formed on the lower surface of the total enthalpy heat exchanger main body 200A and the duct connection ports 41C and 43C (Fig. 3) formed on the upper surface of the total enthalpy heat exchanger main body 200A.

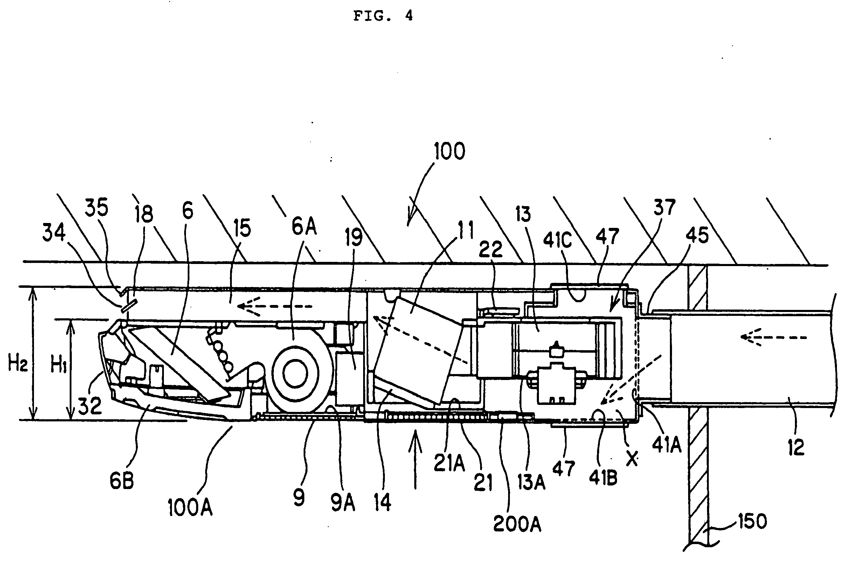

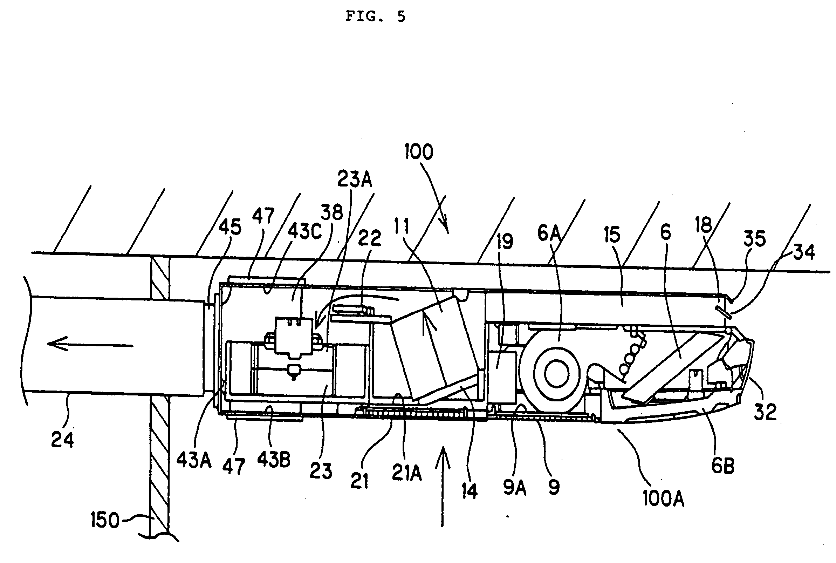

Fig. 3 is a plan view showing the air conditioner 100 when the upper side panel of the total enthalpy heat exchanger main body 200A is detached, Fig. 4 is a cross-sectional view taken along A-A line of Fig. 3, and Fig. 5 is a cross-sectional view taken along B-B line of Fig. 3. As shown in Figs. 4 and 5, the indoor heat exchanger 6, the indoor air blower 6A, a drain pan 6B, a box 19 for electrical equipment, etc. are disposed in the air conditioner main body 100A, and a filter 9A is disposed at the suction grill 9. When the air conditioner is driven, indoor air is sucked through the suction grill 9, and passed through the indoor air blower 6A to the indoor heat exchanger 6. The indoor air is heat-exchanged with refrigerant in the indoor heat exchanger 6, and then blown out through a blow-out port 32 to the room being air-conditioned.

As shown in.Fig. 3, the total heat enthalpy heat-exchanging element 11 is disposed in the total enthalpy heat exchanger main body 200A, and the air supply fan 13 and the exhaust fan 23 are arranged at the rear side of the total enthalpy heat-exchanging element 11. A partition plate 51 is provided between the air supply fan 13 and the exhaust fan 23 to prevent the contamination between the outdoor air and the indoor air. A filter 21A is disposed at the suction grill 21 of the total enthalpy heat exchanger main body 200A. When the total enthalpy heat exchanger main body 200A is driven, the indoor air is sucked through the suction grill 21, and the indoor air reaches the total enthalpy heat-exchanging element 11. In the total enthalpy heat-exchanging element 11, the indoor air is heat-exchanged with the outdoor air, and then the indoor air is discharged through the exhaust fan 23 to the outside. On the other hand, the outdoor air reaches the total enthalpy heat-exchanging element 11 through the air supply fan 13, and it is heat-exchanged with the indoor air in the total enthalpy heat-exchanging element 11. Thereafter, the outdoor air is passed through the air supply path 15, the blow-out louver 18, etc. and then blown out from the blow-out port 34 to the room being air-conditioned.

In the above construction, the blow-out ports 32, 34 of the respective main bodies 100A, 200A are independently formed of each other. The blow-out ports 32 and 34 are disposed to be adjacent to each other so that the air blow out from the air blow-out port of the air conditioner main body 100A and the air blow out from the blow-out port 34 of the total enthalpy heat exchanger main body 200A are freely mixed with each other at the exit of each of the air blow-out ports 32, 34. As described above, the respective air blow-out ports 32 and 34 are independent of each other, and the air of the total enthalpy heat exchanger main body 200A is prevented from invading into the air conditioner main body 100A in the unit.

The height H1 of the air conditioner main body 100A is set to be lower than the height H2 of the total enthalpy heat exchanger main body 200A as shown in Fig. 4, and the air supply path 15 of the total enthalpy heat exchanger main body 200A is disposed above the air conditioner main body 100A located at a lower position. The total height of the height of the air supply path 15 and the height H1 of the air conditioner main body 100A is substantially equal to the height H2 of the total enthalpy heat exchanger main body 200A.

The tip portion of the air supply path 15 is provided with the air blow-out port 34 having substantially the same width as the air supply path 15. The full width of the air blow-out port 34 is set to be equal to the full width of the air blow-out port 32 of the air conditioner main body 100A as shown in Fig. 3. As shown in Fig. 3, a guide vane 35 for guiding air blown out from the air blow-out port 34 to the air blow-out port 32 side of the air conditioner main body 100A is disposed at the air blow-out port of the total enthalpy heat exchanger body 200A as shown in Fig. 3. By properly adjusting the mount angle of the guide vane 35, the mixing effect of air at the exit of each of the air blow-out ports 32, 34 can be enhanced.

As shown in Fig. 4, the air supply fan 13 is provided with a suction port 13A which is designed to face downwardly and blow out air sucked from the suction port 13A toward the total enthalpy heat-exchanging element 11. Furthermore, an air supply chamber 37 intercommunicating with the suction port 13A of the air supply fan 13 is disposed at the total enthalpy heat exchanger main body 200a, and the air supply chamber 37 intercommunicate with the air supply duct connection ports 41A to 41C formed on the back surface, lower surface and upper surface of the total enthalpy heat exchanger main body 200A. In this embodiment, the air supply fan 13 is disposed so that the suction port 13A of the air supply fan 13 is protruded into the inner space of the air supply chamber 37 to provide substantially equal spaces X at the upper and lower sides of the inner space. The spaceX intercommunicates with the air supply duct connection ports 41A to 41C of the total enthalpy heat exchanger main body 200A. Therefore, the outdoor air flows through the air supply duct 12 into the air supply chamber 37, and is sucked into the suction port 13 of the air supply fan 13 through the space X. In this case, the closing members 47 are disposed at the air supply duct connection ports 41B and 41C to which the air supply duct 12 is not connected, and thus air can be prevented from flowing through the air supply duct connection ports 41B, 41C into the air supply chamber 37.

On the other hand, as shown in Fig. 5, the exhaust fan 23 has a suction port 23A formed with being placed face up, and a blow-out port (not shown) for blowing out air sucked from the suction port 23A. This air blow-out port is connected to the exhaust chamber 38 intercommunicating with the air exhaust duct connection ports 43A to 43C of the total enthalpy heat exchanger main body 200A. Accordingly, the indoor air from the room to be air-conditioned is heat-exchanged with the outdoor air in the total enthalpy heat-exchanging element 11, and then sucked from the suction port 23A of the exhaust fan 23 into the exhaust chamber 38. Thereafter, the indoor air is discharged through the air exhaust duct 24 connected to the exhaust chamber 38 to the outside. In this case, the closing members 47 are disposed at the air exhaust duct connection ports 43B and 43C to which no air exhaust duct 24 is connected. Therefore, the air is prevented from flowing from the exhaust chamber 38 through the air exhaust duct connection ports 43B and 43C into the room.

In the above construction, the total enthalpy heat exchanger 200 comprises the air supply chamber 37 intercommunicating with the suction port 13A of the air supply fan 13, and the exhaust chamber 38 intercommunicating with the blow-out port (not shown) of the exhaust fan 23, and the air supply chamber 37 and the exhaust chamber 38 are designed so as to intercommunicate with the air supply duct connection ports 41A to 41C and the air exhaust duct connection ports 43A to 43C formed in the total enthalpy heat exchanger main body 200A, respectively. Therefore, any one of the air supply duct connection ports 41A to 41C and any one of the air exhaust duct connection ports 43A to 43C are arbitrarily selected in accordance with the condition under which the air conditioner 100 is set up, the air supply duct 12 and the air exhaust duct 13 are connected to the air supply duct connection port and the air exhaust duct connection port thus selected.

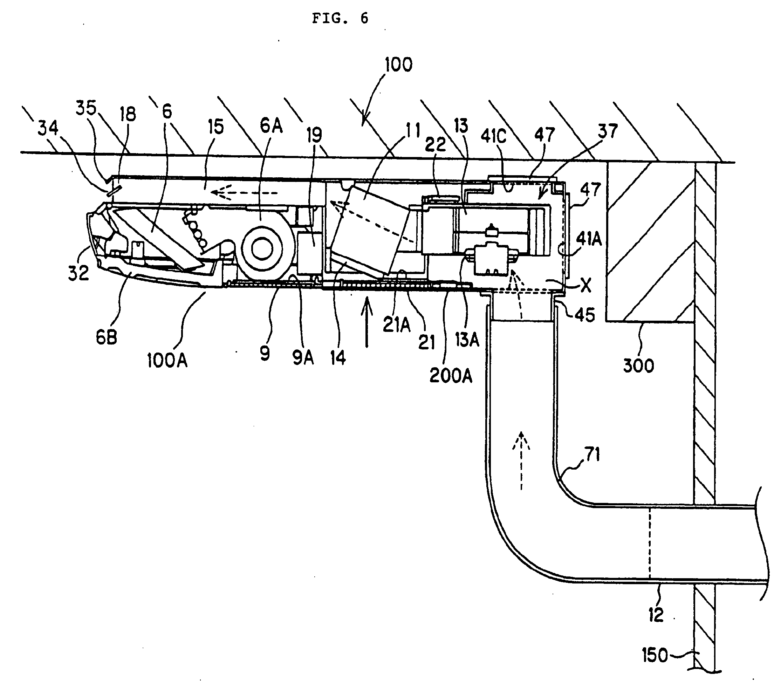

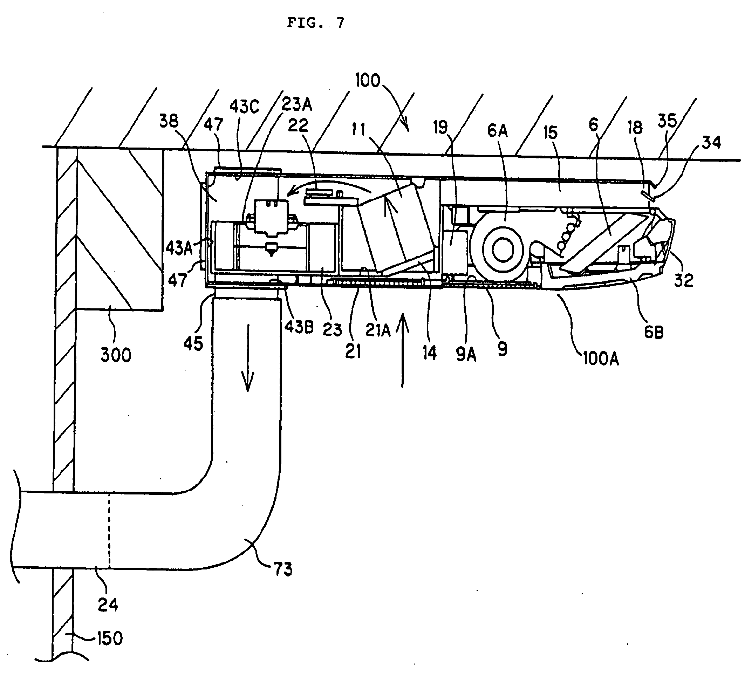

For example, when a beam 300 is protruded from the ceiling at the rear side of the total enthalpy heat exchanger 200, the ducts 12 and 24 are connected to the duct connection ports 41B and 43B formed on the lower surface of the total enthalpy heat exchanger main body 200A through elbows 71 and 73 respectively as shown in Figs. 6 and 7, whereby the ducts 12 and 24 can be drawn out backwardly while avoiding the beam 300. Accordingly, not only the draw-out work of the ducts can be easily performed, but also the air conditioner 100 can be set up in proximity to the wall surface 150, so that the appearance of the arrangement of the air conditioner looks good.

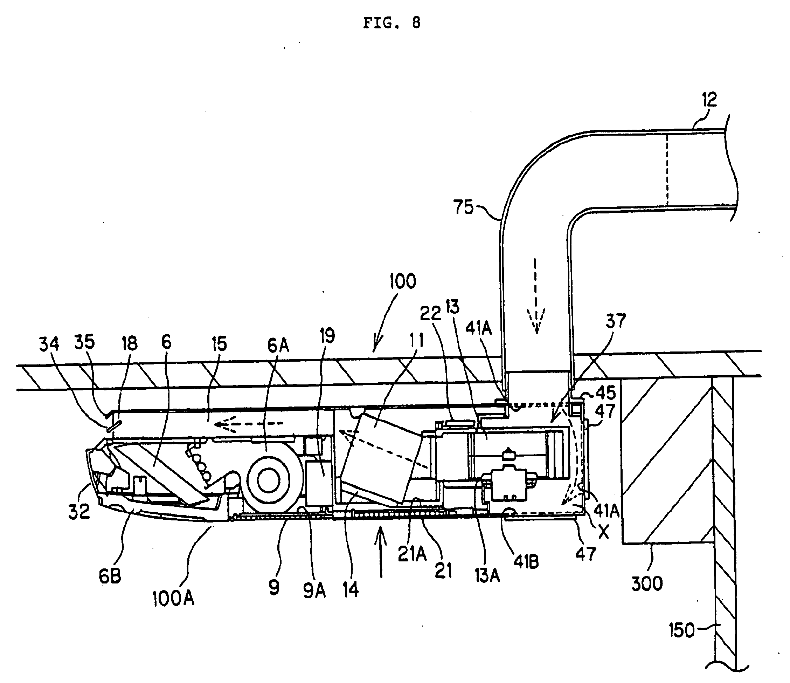

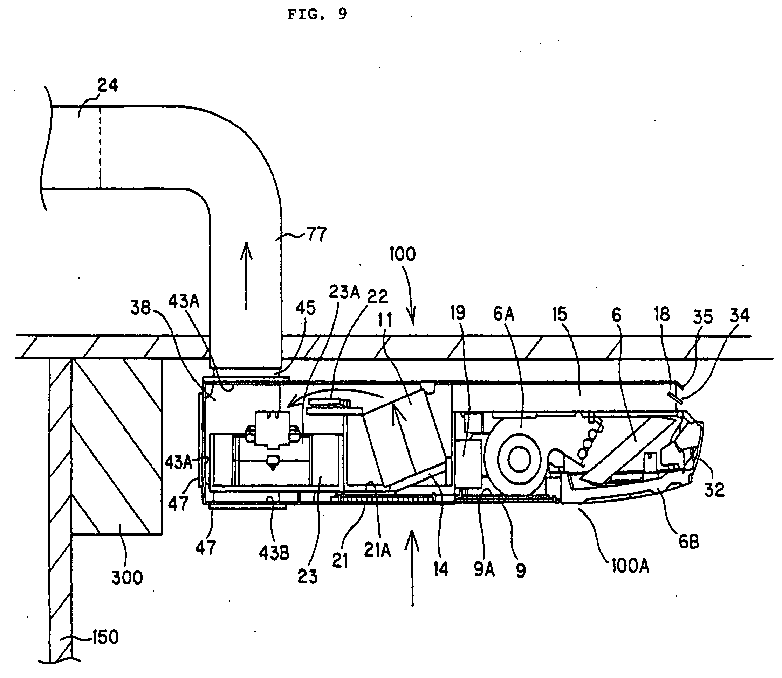

Alternatively, the ducts 12 and 24 are connected to the duct connection ports 41C and 43C formed on the upper surface of the total enthalpy heat exchanger main body 200A through elbows 75 and 77 as shown in Figs. 8 and 9, whereby the ducts 12 and 24 can be also drawn out backwardly while avoiding the beam 300. with this arrangement, not only the air conditioner 100 can be set up in proximity to the wall surface 150, but also the ducts can be arranged to pass under the roof, so that the ducts can be prevented from being exposed to the room and thus the appearance of the arrangement of the air conditioner looks good.

In these cases, the outdoor air flows through the air supply duct 12 into the air supply chamber 37, and sucked through the space X of the air supply chamber 37 into the suction port 13 of the air supply fan 13. Thereafter, the outdoor air reaches the total enthalpy heat-exchanging element 11, and it is heat-exchanged with the indoor air in the total enthalpy heat-exchanging element 11 and then supplied to the room. Furthermore, the indoor air from the room to be air-conditioned is heat-exchanged with the outdoor air in the total enthalpy heat-exchanging element 11, sucked from the exhaust fan 23 into the exhaust chamber 38, and then discharged to the outside through the air exhaust duct 24 connected to the exhaust chamber 38. Accordingly, the total enthalpy heat exchanger 200 can sufficient exhibit its ventilation function.

According to this embodiment, the air conditioner is equipped with the air supply chamber 37 intercommunicating with the suction port 13A of the air supply fan 13 and the exhaust chamber 38 intercommunicating with the blow-out port of the exhaust fan 23, and the air supply chamber 37 and the exhaust chamber 38 are designed so as to be connectable to the plural duct connection ports 41A to 41C and 43A to 43C. Therefore, when each of the ducts 12 and 24 is connected to one of these duct connection ports, any duct connection port can be selected. Accordingly, in accordance with the condition under which the ceiling suspended type air conditioner 100 is set up, each of the ducts 12 and 24 can be connected to the optimal duct connection port, and the degree of freedom for the setup work of the air conditioner 100 can be enhanced.

Furthermore, according to this embodiment, the closing members 47 are disposed at the duct connection ports to which the ducts 12, 24 are not connected, and thus leakage of air through the duct connection ports concerned can be prevented.

The present invention is not limited to the above embodiment, and various modifications may be made without departing from the subject matter of the present invention. For example, in the above embodiment, the air supply duct connection ports 41A to 41C and the air exhaust duct connection ports 43A to 43C are formed on the upper surface, lower surface and back surface of the total enthalpy heat exchanger main body 200A. However, each of these duct connection ports may be formed on any surface of the total enthalpy heat exchanger main body 200A insofar as each of the duct connection ports intercommunicates with each of the chambers 37 and 38. Furthermore, in this embodiment, the air supply duct 12 and the air exhaust duct 24 are connected to the same surface of the total enthalpy heat exchanger main body 200A, however, the present invention is not limited to this mode. That is, these ducts 12 and 24 may be connected to different surfaces of the total enthalpy heat exchanger main body 200A.

## Claims

1. A ceiling suspended type air conditioner (100) comprising an air conditioner main body (100A) suspended from a ceiling, and a total enthalpy heat exchanger main body (200A) joined to the back side of the air conditioner main body (100A) and integrated with the air conditioner main body (100A), wherein the total enthalpy heat exchanger main body (200A) comprises a total enthalpy heat-exchanging element (11) extending across an width of the total enthalpy heat exchanger main body (200A), an air supply fan (13) for supplying outdoor air into a room, an air supply chamber (37) for supplying the outdoor air into the total enthalpy heat-exchanging element (11), an exhaust fan (23) for exhausting indoor air to the outside, and an exhaust chamber (38) for exhausting the indoor air from the total enthalpy heat-exchanging element (11) to the outside; the air supply chamber (37) and exhaust chamber (38) are arranged at the rear side of the total enthalpy heat-exchanging element (11); the air supply fan (13) is arranged in the air supply chamber (37) and the exhaust fan (23) is arranged in the exhaust chamber (38); **characterized in that** the plural air supply duct connection ports (41A, 41B, 41C) intercommunicating with the air supply chamber (37) are formed on plural surfaces of the total enthalpy heat exchanger main body (200A), and any one of the plural air supply duct connection ports is selectively connected to an air supply duct (12); and plural air exhaust duct connection ports (43A, 43B, 43C) intercommunicating with the exhaust chamber (38) are formed on plural surfaces of the total enthalpy heat exchanger main body (200A), and any one of the plural air exhaust duct connection ports is selectively connected to an air exhaust duct (24).

2. The ceiling suspended type air conditioner according to claim 1, wherein the air supply duct connection ports (41A, 41B, 41C) and the air exhaust duct connection ports (43A, 43B, 43C) are formed on the upper surface, lower surface and back surface of the total enthalpy heat exchanger main body (200A).

3. The ceiling suspended type air conditioner according to claim 1 or 2, wherein the air supply duct (12) and the air exhaust duct (24) are connected to one of the air supply duct connection ports (41A, 41B, 41C) and one of the air exhaust duct connection ports (43A, 43B, 43C), the air supply duct connection port connected to the air supply duct (12) and the air exhaust duct connection port connected to the air exhaust duct (24) being formed on the same surface of the total enthalpy heat exchanger main body.

4. The ceiling suspended type air conditioner according to any one of claims 1 to 3, wherein each of the duct connection ports (41A, 41B, 41C, 43A, 43B, 43C) other than the air supply duct connection port and the air exhaust duct connection port to which the air supply duct (12) and the air exhaust duct (24) are connected is provided with a closing member for closing the duct connection port concerned.

## Patentansprüche

1. Klimaanlage (100) vom Deckenaufhängungstyp, die einen Klimaanlagenhauptkörper (100A), der an einer Decke aufgehängt ist, und einen Gesamtenthalpiewärmetauscherhauptkörper (200A), der an der Rückseite des Klimaanlagenhauptkörpers (100A) angebracht ist und mit dem Klimaanlagenhauptkörper (100A) integriert ist, umfasst, wobei der Gesamtenthalpiewärmetauscherhauptkörper (200A) ein Gesamtenthalpiewärmetauscherelement (11), das sich über eine Breite des Gesamtenthalpiewärmetauscherhauptkörpers (200A) erstreckt, ein Luftzufuhrgebläse (13) zum Zuführen von Außenluft in einen Raum, eine Luftzufuhrkammer (37) zum Zuführen der Außenluft in das Gesamtenthalpiewärmetauscherelement (11), ein Ausstoßgebläse (23) zum Ausstoßen von Innenluft nach außen, und eine Ausstoßkammer (38) zum Ausstoßen der Innenluft aus dem Gesamtenthalpiewärmetauscherelement (11) nach außen umfasst; die Luftzufuhrkammer (37) und Ausstoßkammer (38) an der Rückseite des Gesamtenthalpiewärmetauscherelements (11) angeordnet sind; das Luftzufuhrgebläse (13) in der Luftzufuhrkammer (37) und das Ausstoßgebläse (23) in der Ausstoßkammer (38) angeordnet ist; **dadurch gekennzeichnet, dass** die Luftzufuhrleitungsverbindungsanschlüsse (41A, 41B, 41C), die mit der Luftzufuhrkammer (37) kommunizieren, auf mehreren Oberflächen des Gesamtenthalpiewärmetauscherhauptkörpers (200A) gebildet sind und dass einer der mehreren Luftzufuhrleitungsverbindungsanschlüsse selektiv mit einer Luftzufuhrleitung (12) verbunden ist; und dass mehrere Luftausstoßleitungsverbindungsanschlüsse (43A, 43B, 43C), die mit der Ausstoßkammer (38) kommunizieren, auf mehreren Oberflächen des Gesamtenthalpiewärmetauscherhauptkörpers (200A) gebildet sind und dass einer der mehreren Luftausstoßleitungsverbindungsanschlüsse selektiv mit einer Luftausstoßleitung (24) verbunden ist.

2. Klimaanlage vom Deckenaufhängungstyp gemäß Anspruch 1, wobei die Luftzufuhrleitungsverbindungsanschlüsse (41A, 41B, 41C) und die Luftausstoßleitungsverbindungsanschlüsse (43A, 43B, 43C) auf der oberen Oberfläche, unteren Oberfläche und Rückoberfläche des Gesamtenthalpiewärmetauscherhauptkörpers (200A) gebildet sind.

3. Klimaanlage vom Deckenaufhängungstyp gemäß Anspruch 1 oder 2, wobei die Luftzufuhrleitung (12) und die Luftausstoßleitung (24) mit einem der Luftzufuhrleitungsverbindungsanschlüsse (41A, 41B, 41C) und einem der Luftausstoßleitungsverbindungsanschlüsse (43A, 43B, 43C) verbunden sind, wobei der Luftzufuhrleitungsverbindungsanschluss, der mit der Luftzufuhrleitung (12) verbunden ist, und der Luftausstoßleitungsverbindungsanschluss, der mit der Luftausstoßleitung (24) verbunden ist, auf derselben Oberfläche des Gesamtenthalpiewärmetauscherhauptkörpers (200A) gebildet sind.

4. Klimaanlage vom Deckenaufhängungstyp gemäß einem der Ansprüche 1 bis 3, wobei jeder der Leitungsverbindungsanschlüsse (41A, 41B, 41C, 43A, 43B, 43C) außer dem Luftzufuhrleitungsverbindungsanschluss und dem Luftausstoßleitungsverbindungsanschluss, mit denen die Luftzufuhrleitung (12) und die Luftausstoßleitung (24) verbunden sind, mit einem Verschlusselement zum Verschließen des betreffenden Leitungsverbindungsanschlusses versehen ist.

## Revendications

1. Climatiseur du type suspendu au plafond (100) comprenant un corps principal de climatiseur (100A) suspendu à un plafond, et un corps principal d'échangeur de chaleur à enthalpie totale (200A) joint au côté arrière du corps principal de climatiseur (100A) et intégré avec le corps principal de climatiseur (100A), dans lequel le corps principal d'échangeur de chaleur à enthalpie totale (200A) comprend un élément d'échange de chaleur à enthalpie totale (11) s'étendant sur une largeur du corps principal d'échangeur de chaleur à enthalpie totale (200A), un ventilateur de fourniture d'air (13) pour fournir de l'air extérieur dans une salle, une chambre de fourniture d'air (37) pour fournir l'air extérieur dans l'élément d'échange de chaleur à enthalpie totale (11), un ventilateur d'évacuation (23) pour évacuer l'air intérieur à l'extérieur, et une chambre d'évacuation (38) pour évacuer l'air intérieur de l'élément d'échange de chaleur à enthalpie totale (11) à l'extérieur ; la chambre de fourniture d'air (37) et la chambre d'évacuation (38) sont agencées au niveau du côté arrière de l'élément d'échange de chaleur à enthalpie totale (11) ; le ventilateur de fourniture d'air (13) est agencé dans la chambre de fourniture d'air (37) et le ventilateur d'évacuation (23) est agencé dans la chambre d'évacuation (38) ; **caractérisé en ce qu'**une pluralité d'orifices de liaison à un conduit de fourniture d'air (41A, 41B, 41C) intercommuniquant avec la chambre de fourniture d'air (37) sont formés sur plusieurs surfaces du corps principal d'échangeur de chaleur à enthalpie totale (200A), et l'un quelconque de la pluralité d'orifices de liaison à un conduit de fourniture d'air est relié de manière sélective à un conduit de fourniture d'air (12) ; et une pluralité d'orifices de liaison à un conduit d'évacuation d'air (43A, 43B, 43C) intercommuniquant avec la chambre d'évacuation (38) sont formés sur plusieurs surfaces du corps principal d'échangeur de chaleur à enthalpie totale (200A), et l'un quelconque de la pluralité d'orifices de liaison à un conduit d'évacuation d'air est relié de manière sélective à un conduit d'évacuation d'air (24).

2. Climatiseur du type suspendu au plafond selon la revendication 1, dans lequel les orifices de liaison à un conduit de fourniture d'air (41A, 41B, 41C) et les orifices de liaison à un conduit d'évacuation d'air (43A, 43B, 43C) sont formés sur la surface supérieure, la surface inférieure et la surface arrière du corps principal d'échangeur de chaleur à enthalpie totale (200A).

3. Climatiseur du type suspendu au plafond selon la revendication 1 ou 2, dans lequel le conduit de fourniture d'air (12) et le conduit d'évacuation d'air (24) sont reliés à l'un des orifices de liaison à un conduit de fourniture d'air (41A, 41B, 41C) et à l'un des orifices de liaison à un conduit d'évacuation d'air (43A, 43B, 43C), l'orifice de liaison à un conduit de fourniture d'air relié au conduit de fourniture d'air (12) et l'orifice de liaison à un conduit d'évacuation d'air relié au conduit d'évacuation d'air (24) étant formés sur la même surface du corps principal d'échangeur de chaleur à enthalpie totale.

4. Climatiseur du type suspendu au plafond selon l'une quelconque des revendications 1 à 3, dans lequel chacun des orifices de liaison à un conduit (41A, 41B, 41C, 43A, 43B, 43C) autres que l'orifice de liaison à un conduit de fourniture d'air et que l'orifice de liaison à un conduit d'évacuation d'air auxquels le conduit de fourniture d'air (12) et le conduit d'évacuation d'air (24) sont reliés est pourvu d'un élément de fermeture pour fermer l'orifice de liaison à un conduit concerné.
